**Europäisches Patentamt**

**European Patent Office**

**Office européen des brevets**

(11) Publication number: **0 200 453**

**A1**

## EUROPEAN PATENT APPLICATION

(21) Application number: **86302988.0**

(22) Date of filing: **21.04.86**

(51) Int. Cl.⁴: **F 16 L 1/04**

(30) Priority: **19.04.85 NO 851569**

(43) Date of publication of application:
**05.11.86 Bulletin 86/45**

(84) Designated Contracting States:
**DE FR GB IT NL**

(71) Applicant: **DEN NORSKE STATS OLJESELSKAP A.S.**
**Postboks 300**
**N-4001 Stavanger(NO)**

(71) Applicant: **LIAAEN INDUSTRIER A/S**
**Kjobmannsgt. 23**
**N-6000 Alesund(NO)**

(72) Inventor: **Furuholt, Edgar**
**Ivar Aasensv. 7**
**N-7000 Trondheim(NO)**

(72) Inventor: **Liaaen, Anders M.**
**Store Norve 18**
**N-6000 Alesund(NO)**

(74) Representative: **Rees, David Christopher et al,**
**Kilburn & Strode 30 John Street**
**London WC1N 2DD(GB)**

(54) Coupling device for submarine pipeline systems.

(57) A demountable coupling device for submarine pipeline sections (33, 34, 35) where one or a plurality of conduits can be connected together on the seabed by a remotely controlled operation without the use of divers or guidewires. The connection of the pipeline sections, which are provided with square flanges (2), takes place by vertical movement of the coupling unit (1) of the coupling device, which is provided with a groove (1') at each of its ends, the grooves being adapted for reception of the largely vertical portions of the pipeline flanges (2) when in an operating position on the seabed. The casing (1) of the coupling unit contains all components which are necessary for the connections. Once the C-shaped grooves (1') of the coupling unit are engaged by the pipeline flanges (2), connection takes place by moving telescopically displacable connecting tubes (4, 19, 24) of the casing (1) into corresponding bushings (16, 25) in the respective conduits of the pipeline flanges (2) to ensure effective seal tightening. The coupling operation is reversible, and mounting can take place independent of the order of the demounting. To achieve a prestressing of the respective pipeline flanges (2) against the coupling unit, prestressing devices are placed in the casing of the coupling (1). The coupling is secured by means of a locking mechanism (53, 54, 56).

./...

Fig.1

## COUPLING DEVICE FOR
## SUBMARINE PIPELINE SYSTEMS

The present invention relates to a demountable coupling for submarine pipeline systems and more particularly to a device permitting a releasable connection of pipeline sections with one or several conduits (sections of pipeline bundles), to other pipeline sections, to valves or to wellheads.

Increasing experience from the oil exploration and activities offshore, together with research and development, have gradually made possible the economic exploitation of many of the present marginal oil and gas fields, which have been discovered beneath the seabed. This has provided an incentive for the developments which have taken place in various technical fields, one of which includes the laying of the pipelines in deep water.

It is an object of the present invention to provide a coupling system whereby laying pipeline bundles and connecting these should be reversible, making a replacement of any section of a pipeline possible when such a replacement is needed. The coupling should be designed and arranged to permit mounting and demounting preferably without any actual displacement of the ends of the pipeline bundles being necessary.

It is a further object of the invention to allow the joining operation at the seabed to take place without the use of guide wires or divers. The requirements for such a demountable coupling includes amongst other things that the mechanical stability of the joints should be at least as large as in the pipeline bundle elsewhere.

The pipeline sections etc. (valves, wellheads, and so on) which are to be connected together, are connected with end flanges having two oppositeposition ed parallel plane side surfaces, which run at least approximately vertically once the pipeline sections have been situated in an operative position. According to the invention advantage is taken of this fact in that the preliminary connection operations between for instance a pipeline section on the seabed and the coupling device is made by an exclusively vertically downward movement of the coupling device, which includes a coupling unit whose casing at each of its two axial end portions is designed with continuous grooves dimensioned in order to receive the vertical flange portions. The connecting of the pipe end portions thus takes place by a purely vertical movement without horizontal towing in.

The casing of the coupling preferably contains hydraulically actuated axially moveable connection tubes for leak tight joining to the conduits of the pipeline sections (in reality via linings). The casing of the coupling moreover preferably includes hydraulic tensioning devices. These are preferably operative only during the coupling and decoupling operations, as a releasable mechanical locking device in the casing of the coupling is preferably arranged to come into operation after connection is established, in order to secure the locking-function in a connected state while maintaining the tension of the tube flange against the coupling, which is preferably achieved hydraulically. The locking and latching of the connecting tubes with the conduits may be released on demounting when the need arises to replace a pipeline section etc. The coupling operation may thus be reversible, and mounting can take place independently of the chosen order of demounting.

The coupling device according to the invention displays the advantage that a single coupling unit may include all hydraulic and mechanical components built into the device. Mounting and demounting operations are adopted for remote control and may render the use of divers and guide-wires superfluous. These operations may thus take place even at depths where the use of divers is unpractical.

For the connection of sections of pipeline bundles, each of which comprises a plurality of conduits arranged within an external casing, each of the coaxial, axially moveable connecting tubes (telescopic tubes), in the coupling device, which in number and size correspond to the conduits in the sections of the pipeline bundles, are preferably provided with a common hydraulic servo-piston for each flange side. Thereby, the connecting tubes of each respective flange side can be moved synchronously to be received by the corresponding conduits at the respective axial end of the casing.

Thus, connection preferably takes place by means of hydraulics, and the flanges of the sections of the pipeline are preferably prestressed against the coupling. The joint between the tube flanges and the coupling can be mechanically locked, whereby the hydraulic prestressing pressure can be suspended after connection has been established. Demounting can be carried out in a controlled way, and the end flanges of the sections of the pipeline bundle can remain intact and unharmed after demounting. The respective conduits of two adjoining sections of pipeline bundles can be connected in a leak tight manner via corresponding conduits in the coupling units.

The casing can preferably include four tensioning wedges, two for each flange side. Each tensioning wedge can have the shape of a cylindrical wedge, which by hydraulic action can be arranged to be pulled along a rectangular wedge. When the desired tensioning of the tube flange against the coupling is achieved, the hydraulic pressure can be suspended, as the wedge mechanism is preferably of a self locking type.

Preferably, the coupling device includes prestressing devices which are arranged to be actuated during the connecting operation in order to prestress the respective tube flanges against the coupling device. The coupling device preferably also includes a locking device in the casing which, by maintaining the prestressing, is arranged to ensure locking when connected, the locking device being capable of being unlocked to allow for uncoupling. The groove is preferably a through-running groove having the general shape of a right angled C-shaped edge opening.

Preferably, the connecting tubes, are coaxial telescopically displaceable connecting tubes which in number and size correspond to the conduits and which for each of the flange sides of the coupling device are provided with a common preferably hydraulic servo-piston enabling the connecting tubes of the respective flange sides to be displaced simultaneously for tight engagement with the corresponding conduits at the respective axial ends of the coupling device.

The prestressing device may comprise four prestressing wedges, two for each casing groove in the coupling unit, each wedge being cylindrical and located to press against the flange surface of the adjoining pipeline bundle, each wedge being arranged to be displaced along a wedge surface by hydraulic pressure, the arrangement being self-locking, whereby the hydraulic pressure can be suspended once the desired prestressing of the flange of the pipeline bundle against the coupling device has been achieved.

Preferably, a ring seal is located between the axially displacable connecting tubes associated with one of the flange and those associated with the other flange, the ring seal being housed in a groove around the perimeter of one of the connecting tubes, the device further including an enclosing tapered sleeve which serves to put the seal ring under pressure, is axially displacable and is able to be locked in a desired axial position. Preferably, the diameter of the connecting tube, except in the sealing area, is reduced, whereby the diameter outside the sealing area will be maintained after the ring seal has been subjected to pressure by means of the tapered sleeve when this is moved to its operative position.

The locking device may comprise axially displacable elements which are connected to the connecting tubes, the elements consisting of a locking bar with a transverse groove for a freely moveable locking piece and an axially directed locking tube with a locking groove cooperating this the groove in the bar and the locking piece, the locking device being arranged to be positioned in its locking position when the connecting tubes are in their outer, connected position where the locking piece lockingly engages the locking groove of the locking tube and thereby bars any backward movements of the connecting tubes, the locking operation being reversible on uncoupling by increasing the pressure on the decoupling side of the servo-piston until the locking device is cut off, the locking bar and the locking tube being respectively secured to each of the servo pistons, to enable the connecting tubes of each flange side to remain in their outer, connected position when connected.

The opening connection between the sections of the pipeline bundles may serve as a return circuit for inhibitor fluid which is forced to flow through a conduit through the pipeline bundles and coupling units, and the connecting tubes are provided with a hydraulic valve arranged for remote control for automatic opening when the coupling unit is connected to the pipe sections.

The invention may be carried into practice in various ways and one embodiment will now be described by way of example with reference to the accompanying drawings in which:

Figure 1 is a horizontal axial section through a coupling according to the invention being connected to sections of pipeline bundles at each end;

Figure 2 is a schematic outline in plan of sections of pipeline bundles being connected by means of the coupling of Figure 1;

Figure 3 is a view similar to Figure 2 portions of which are shown in horizontal cross section;

Figure 4 shows part of Figure 1 to a larger scale, in particular a mechanical locking device, the function of which is to keep pipeline connections in a connected state after suspension of the hydraulic pressure;

Figure 5 shows in two angularly displaced axial sections, a hydraulic guiding device for a so called inhibitor valve, which may be employed in combination with a coupling according to the invention;

Figures 6 to 8 are successive part-axial sections showing three steps in the mounting operation for a coupling according to the invention;

Figures 9 to 11 are successive part-axial sections showing three steps in the axial displacement operation of the connecting tubes in the casing of the coupling with Figure 11 showing the tubes in the position in which they are received by the corresponding conduits at each flange side.

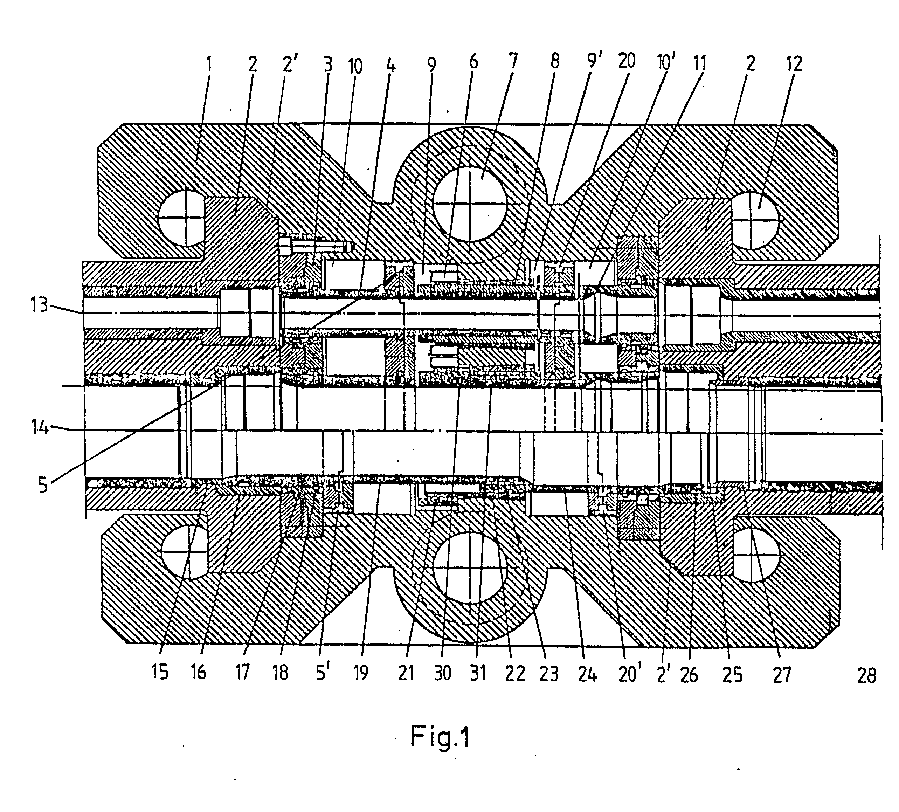

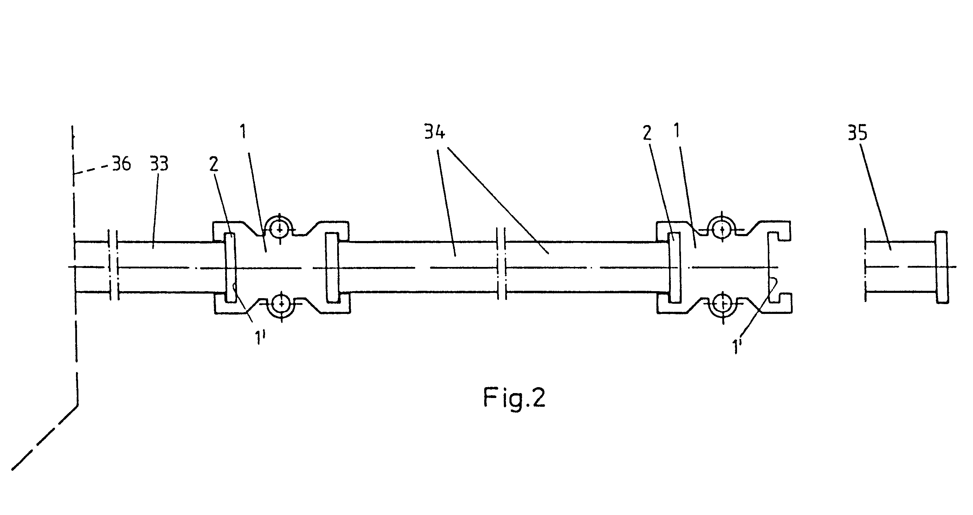

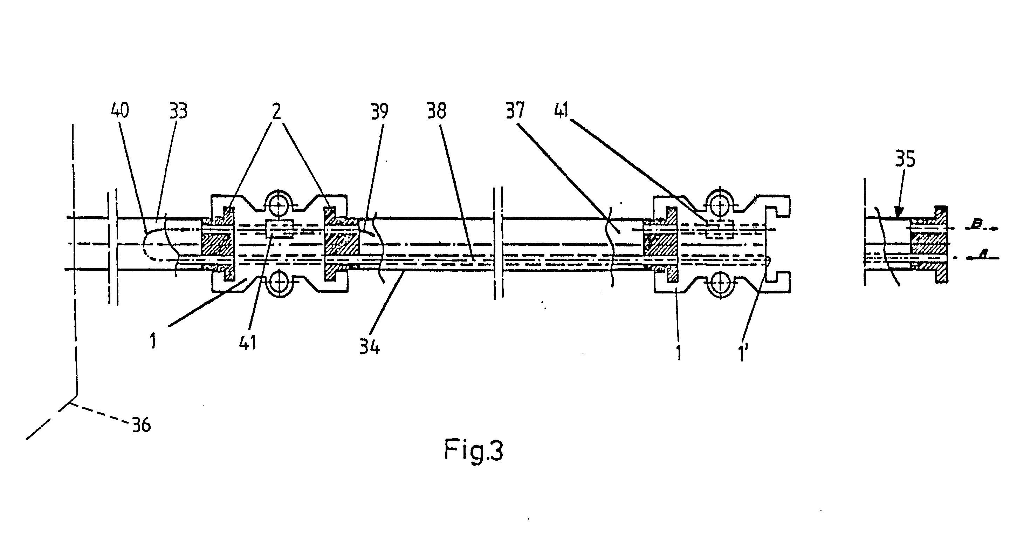

In Figure 1, which is a horizontal axial section through the coupling according to the invention with sections of pipeline bundles connected at its axial end portions, 1 designates the casing of the coupling, and 2 designates a square end flange at each section of the pipeline bundle. Each end flange 2 has two opposite parallel side surfaces which extend generally vertically when the sections of the pipeline bundles are on the seabed in a position for use. In the embodiment shown, each end flange is formed with a bevel 2'. As shown in Figure 1, 2 and 3, each end flange 2 is received by a correspondingly formed groove 1' in the corresponding coupling unit defined by an approximately right angled C-shaped cross section (see Figures 2 and 3).

Reference numeral 3 designates the bottom of a cylinder divided in two in the casing of the coupling unit, while 4 designates an internal axially displacable connecting tube in the casing, intended for connection of service tubes. A common hydraulic-servo piston 5 is mounted as shown in the two positions 5 and 5' for connecting the axially displacable connecting tubes 4 in the casing 1 with he conduits in the flange 2 of the left-hand section of the pipeline bundle shown in Figure 1.

The casing 1 also includes a pulling tool 6, a connection 7 for controlling the handling, and tapered sleeve or sealing ring 8 between axially displaceable connecting tubes (telescopic tubes). The casing 1 further incorporates hydraulic oil chambers 9 and 9' for the coupling operation and two hydraulic oil chambers 10 and 10' for decoupling.

Sections 33, 34, 35 of pipeline bundles and coupling units 1 are mounted consecutively by connecting a coupling unit 1 to the flange 2 of a pipe line bundle 34, after which the flange 2 of the next pipeline bundle 34 is connected to the other end of the same coupling unit 1 and so forth (see Figures 2 and 3).

Once the coupling unit 1 is mounted by remote control to the flange 2 of the pipeline bundle on the left of Figure 1, and is brought into a correct position, the pressure medium of the oil chamber 9 is activated. The common servo-piston 5 then causes all the joining or connecting tubes in the casing 1 to be simultaneously moved into their respective conduits in the flange 2 of the left-hand pipeline bundle.

The axially displaceable connecting tubes, including the internal connecting tube for joining the service tubes, are thereby pressed into respective bushings in the flange 2 of the pipeline bundle. The forward edge of each connecting tube is chamfered to ensure correct orientation of the tubes being joined.

As shown in Figure 1, the casing includes an external axially displacable connecting tube 11 for joining service tubes and a prestressing device comprising four four wedges, two on each flange side. The prestressing device will be described in more detail below.

Each flange 2 has an opening for a service tube 13 and a production line 14 in the left-hand pipeline bundle. A sleeve 15 is located in the opening in the flange 2 for the production line. In addition, the flange 2 includes a bushing 16 while the casing 1 includes, a flexible guiding device 17 and a sealing ring 18, all of which are intended to accommodate the axially displacable connecting tubes, including the internal connecting tube 4 for connection to the service tube 13 and an internal connecting tube 19 for connection to the production pipeline 14.

The connecting tubes 4, 19 are provided with seals which, during connection, will be pressed into a force fit with the flange bushings 16. Thereby an effective seal is achieved for the respective tube connections. This operation is followed by prestressing the tube flange 2 against the casing 1 by means of the wedge devices 12 (as will be explained in more detail below), on each side of the respective flanges 2 of the pipeline bundle.

In addition to incorporating all the components necessary to join all the tube connections, the casing 1 also constitutes a power transmitting link between the adjoining pipeline bundles. The rigidity of the pipeline bundle depends upon the ability of the external pipe to absorb tensile and bending loads.

Since the coupling comprises part of the pipeline system, it must be able to tolerate the loads to which the rest of the pipeline bundle is subjected. Thus, once a tight connection is established between the conduits on each side of the coupling unit, the flanges 2 of the pipeline bundle will have to be prestressed against the coupling unit.

Referring again to Figure 1, the prestressing device comprises four prestressing wedges 12, two on each side flange, each in the form of a cylindrical wedge located against the adjacent flange surface of the pipeline bundle and arranged to be pulled along a rectangular wedge by means of hydraulic force. The wedge device is self locking, allowing the hydraulic pressure to be suspended once the desired prestressing of the flange 2 of the pipeline bundle against the coupling unit 1 is achieved. This prestressing ensures that the flange 2 of the pipeline bundle remains in its position in relation to the casing 1.

Joining each of the conduits in adjacent bundles e.g. 33, 34, 35, etc is achieved by displacing the connecting tubes 4, 19 in the casing 1 into the respective conduits 30, 14 in the flange 2 of the pipeline bundle by means of hydraulic pressure. As already mentioned, (the various connecting tubes e.g. 4, 19) are secured in a common servo piston 5, having the shape of a hydraulic pressure piston, on each side of the coupling. The piston 5 is an assembly of two plates which are bolted together. The displacable connecting tubes are provided with collars between the piston plates and are thereby locked axially to the servo piston 5 in a simple and secure manner.

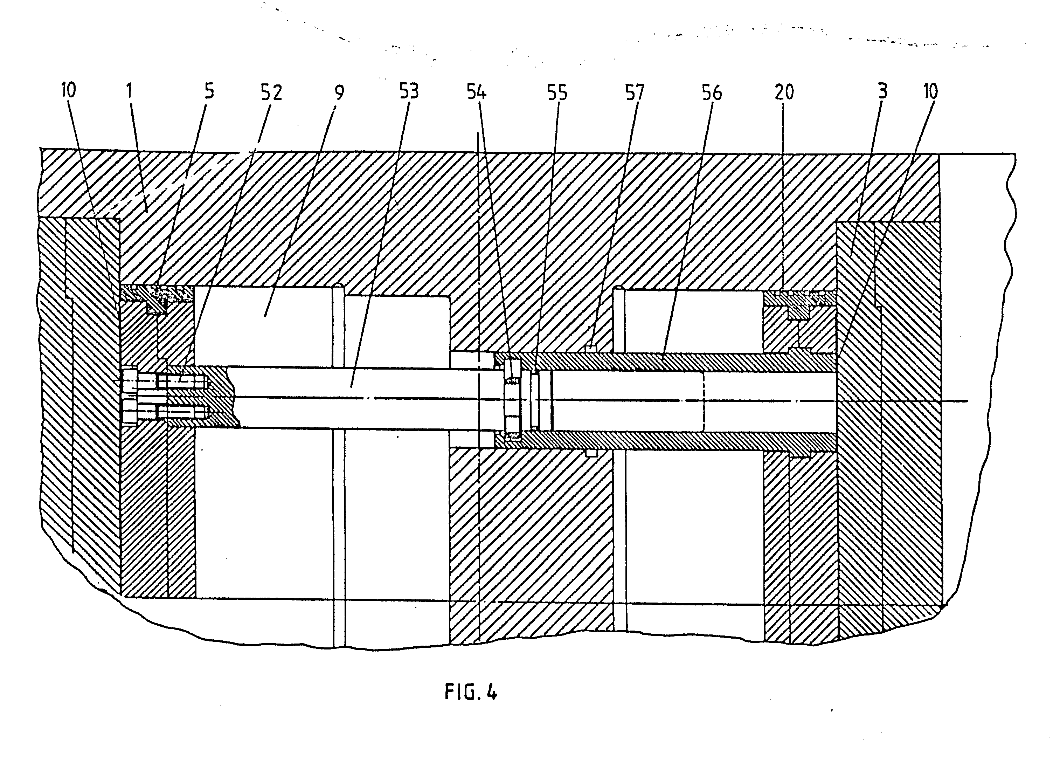

Displacement of the connecting tubes and subsequent coupling takes place by the application of hydraulic pressure on the rear side of the piston 5 in the hydraulic chamber 9. The servo piston 5 will then move, together with all the connecting tubes towards the left in Figure 1, thus enabling the tubes to be moved towards and pressed into their respective sleeves 16 in the flange 2 of the adjoining pipeline bundle. Once the piston 5 has arrived at its extreme end position 5', all of the tube connections will have been made. The oil pressure behind piston 5 may then be suspended and the piston 5, with its connecting tubes 4,19 will remain in this position due to a mechanical locking device, which will be described in more detail with reference to Figure 4. In the meantime it will suffice to say that this locking device is not activated before both flange sides are connected.

By means of the same coupling, the next flange 2, on the right-hand side in Figure 1, is placed in position, and connection is achieved by the same procedure as described above by pressing axially displacable connecting tubes in the casing 1 into their respective tube sockets in the flange 2 of the pipeline bundle by means of a common hydraulic piston 20 shown on its two positions, 20 and 20'.

Within the casing 1 there is also a conical sleeve 22 having a lock nut 21 which will be described in more detail below. This conical sleeve 22 surrounds a sealing ring 23 between the internal 19 and external 24 telescopically displaceable connecting tubes in the housing 1 of the coupling. Sealing between the external connecting tube 24 and a bushing 25 in the right flange 2 is effected by compression of a special sealing ring 26 at the end of the connecting tube 24, caused by the bushing 25 having a lesser diameter. This is in principle the same for both flanges.

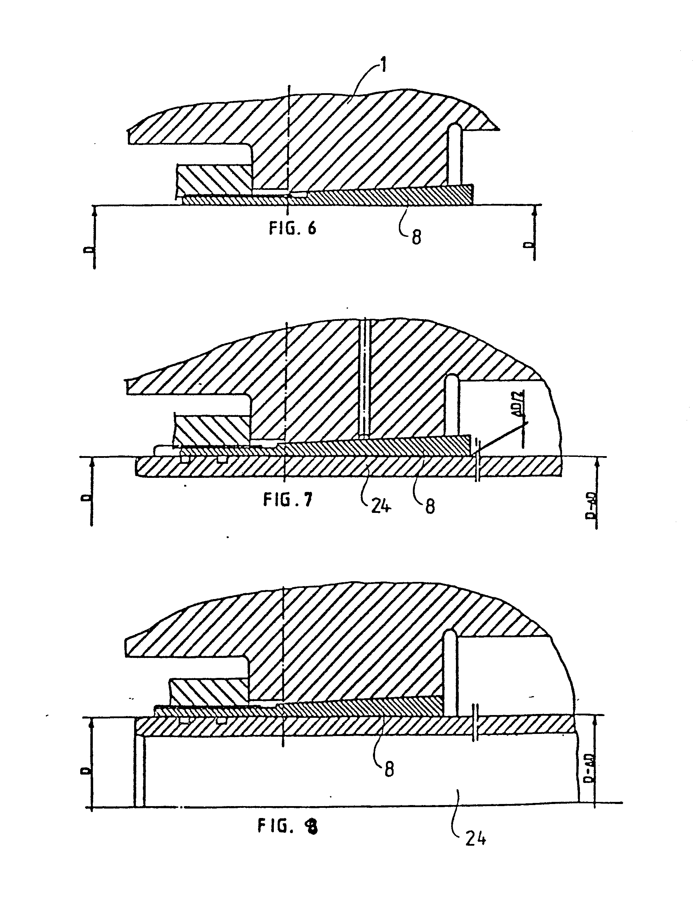

To achieve the necessary pressure on the sealing ring 23 between the internal 19 and the external 24 axially displaceable connection tubes, a special device is employed which will be described in more detail in connection with Figures 6-8.

The telescopically displaceable connecting tubes, including the external connecting tube 24 for connection to the production pipeline on the right-hand side as shown in Figure 1, are correspondingly provided with a common servo piston 20 in the same way as the connecting tubes 4, 19 on the left-hand side and are connected to their respective conduits in the flange 2 of the right-hand pipeline bundle in the same way as described for the connecting tubes 4, 19 to the left-hand flange. A sleeve 27 is provided in the right-hand flange 2 of the pipeline bundle, corresponding to the sleeve 15 in the left-hand flange 2.

A schematic horizontal section is shown in Figure 3, of the sections 33, 34 and 35 of the pipeline bundles being connected by means of coupling devices according to the invention. Reference numeral 36 indicates a wellhead connected to the section 33 of the pipeline bundle.

By means of such a pipeline system comprising pipeline bundles with coupling units as described it is possible to control and regulate the composition of the fluid in the space 37, shown in Figure 3, between the conduits in the pipeline bundle and the external casing 33, 34, 35. In the period between fabrication and laying the pipeline bundle, it is desired to employ this space 37 for buoyancy of the pipeline bundle and to take advantage of this ability for storing, transport and handling. The chamber 37 is therefore filled with gas until, after installation on the seabed, it is desired to fill the chamber 37 with water or seawater having an inhibitor effect on the surfaces in contact with the inhibitor fluid. To achieve this a conduit 38 is arranged to extend along the whole pipeline bundle for supplying inhibitor fluid from the starting point, i.e. the wellhead 36 in Figure 3. A conduit for return, aeration and control is provided for by means of a hole in each pipe-flange 2. The conduit is closed during installation with a releasable plug 39. The device will be brought into operation by the movement of the servo piston 5, 20 when mounting the coupling unit, whereby the plug 39 will be released and pushed into the casing chamber 37. The flange 2 on the wellhead 36 is provided with an open connecting loop 40 between the two conduits labelled generally A and B in Figure 3. During mounting of each coupling unit 1, the B-conduit will be kept closed by means of an inhibitor valve 41 until the next pipeline bundle 34 is connected to the coupling unit, after which it may open automatically.

During installation of pipeline bundles and coupling units it may be suitable to let the pipeline bundles sink to the bottom one by one as installation takes place. After installation of a coupling unit 1 water may be allowed to fill the last pipeline bundle by opening the inhibitor valve 41.

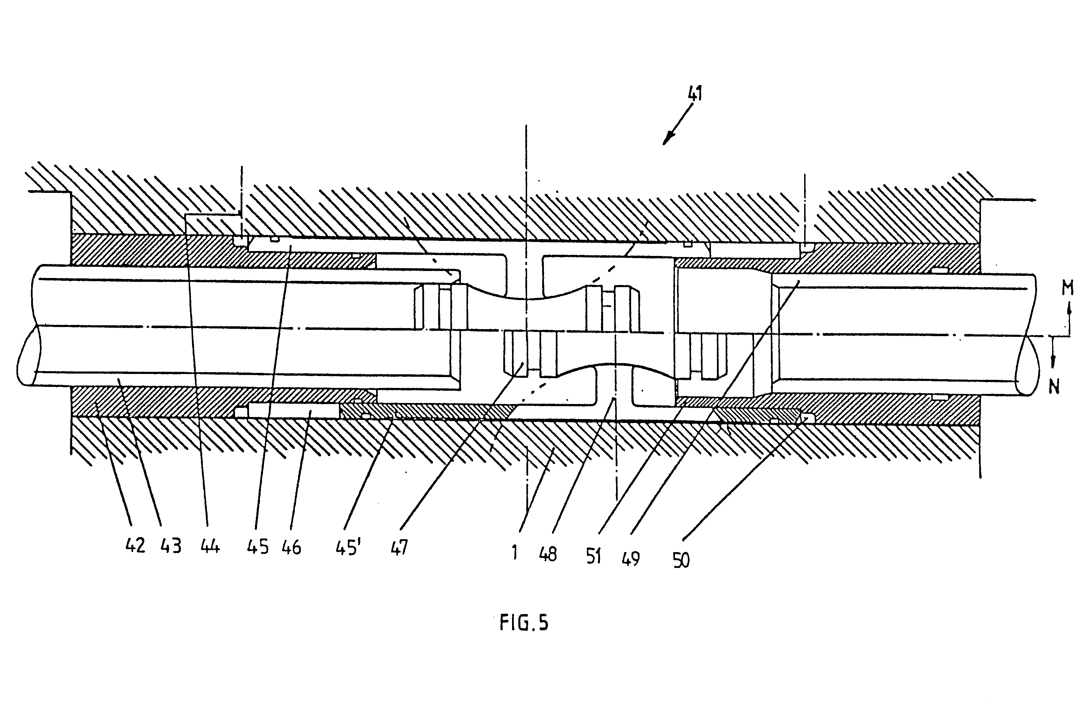

The valve 41 is located within the control conduit for controlling the inhibitor fluid and comprises two bushes 42, 51 fixed within conduits at spaced locations. A pushing tube 43, 49 is slidably located in each of the bushes 42, 51 respectively, and a piston 45 is slidably located between the tubes 43, 49. The piston 45 is connected to a two ended sealing element (e.g. 47) by a member 48, each end of which is adapted to form a seal with either of the two tubes 43, 49. The piston 45 can be moved to the right or to the left as shown in figure 5 by admitting hydraulic fluid to one or other cylinders 46, so via a pressure conduit e.g. 44.

When the coupling unit is connected only to the left-hand pipeline bundle, the inhibitor valve 41 is closed as indicated in the upper section M. Here, the sealing element 47 is enclosed by the pushing tube 43.

When it is desired to let fluid flow through the valve, pressure oil is conveyed through the pressure conduit 44 and the piston 45 will be pushed to the position 45' as shown in the lower section N. In this position the inhibitor valve 41 is open. Sea water can now flow into the pipeline bundle via the coupling unit 1.

Once the pipeline sections have been installed, one has accordingly an opportunity to inject new fluid having inhibitory effects into the pipeline bundle to protect it against corrosion. The return conduit may be used for analysis and control of the fluid content. The fluid pumped into the pipeline bundles may be seawater with corrosion inhibiting additives.

Referring now to Figures 6 to 11, to achieve the necessary pressure on the sealing ring 23 located between the internal and the external telescopic connecting tubes, 19 and 24, the coupling unit 1 is assembled as follows, in the workshop:

First the tapered or conical sleeve 8 with

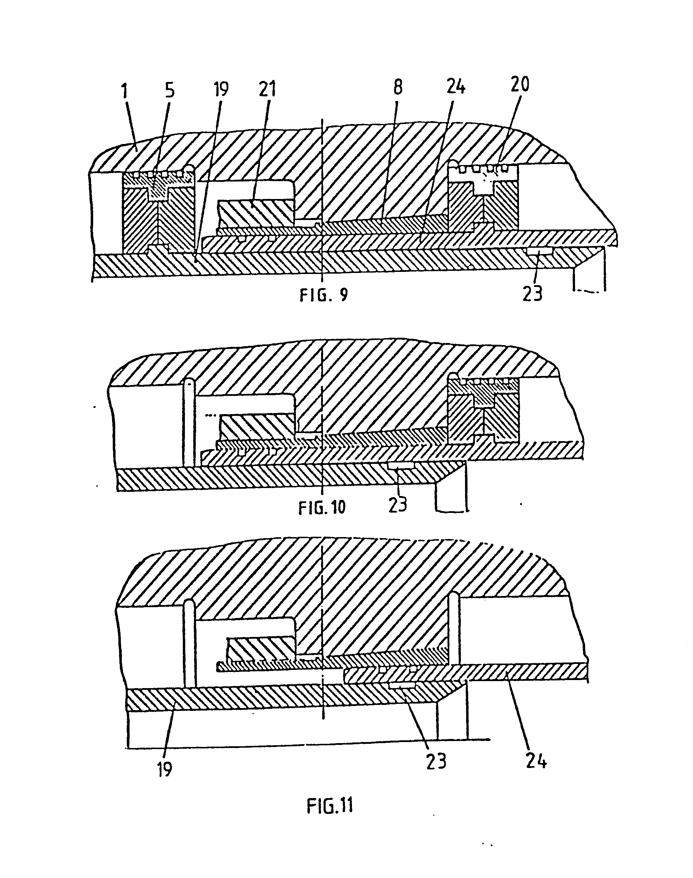

internal diameter D is inserted into the housing (Figure 6). Before this is pulled into place, the connecting tube 24 is inserted as shown in Figure 7. The telescopically displaceable connecting tube 24 has its outer diameter reduced to $D - D$ by machining e.g. by a lathe except in the sealing portion. Thus the tapered sleeve 8 can be pulled up by means of a hydraulic nut and simultaneously, with compressing the tapered sleeve can be compressed by the oil pressure created by a high pressure injection pump on the external tapered surface (the so called SKF principle). When this operation is terminated, the situation is as shown in Figure 8. Due to the machining of the outer portion of the telescopically displaceable connecting tube 24, the internal diameter of the tube is unaffected by the tapered sleeve which now has a reduced internal diameter $(D - D)$. The hydraulic nut is now replaced by a common lock nut. In the portion beneath the locking nut the tapered sleeve and the connecting tube 24 both have the same diameter as before insertion.

It is also possible to insert the connecting tubes and the piston from the other side of the coupling, as shown in Figure 9. The connecting tubes tasks 19, 24 are inserted by the application of suction. The diameter of a portion of the connecting tube 19 is reduced on each side of the ring seal 23 $(D_1 - D)$.

The coupling as shown in Figure 9 is ready for use.

The first (left-hand) flange 2 is connected to the coupling unit and the connecting tube 19 is moved to the position shown in Figure 10, in which it engages the corresponding opening in the flange 2.

Now when the other (right-hand) flange is coupled, the connecting tube 24 will be moved to the right and will be forced into the tapered sleeve 8, whose internal diameter now is reduced by D. The connecting tube 24 will thereby become compressed, and the internal periphery of the tube will exert a pressure against the ringseal 23 whereby an effective sealing will be achieved. When both portions of the coupling unit are connected to the respective tube flanges 2, the servo pistons 5 and 20 will in this way be located at their extreme positions.

By this stage the mechanical locking device shown in Figure 4 will have also arrived at its outer position. This locking device includes a securing device 52 for a locking rod 53 which receives a locking ring 54 in a groove formed in its surface. This locking ring 54 is freely moveable in a direction transverse to that of the rod axis. A ring seal 55 is located between the locking rod 53 and a locking tube 56. The tube 56 is fitted with a groove which cooperates with the groove in the rod 53 and with a locking ring 54, such as when the locking device has arrived in its outer position, the locking ring 54 will fall into the groove in the locking rod 53 and into the groove in the locking tube 56. The locking ring 54, which possibly may be replaced by a locking bar, will thereby block any return movement, and the telescopically displaceable connecting tube will remain in a locked position. This locking device is not engaged before both flange portions are connected. A sealing ring 57 is located between the locking tube 56 and the casing 1. The mechanical locking by means of the locking device can only be suspended by increasing the pressure from the uncoupling side 10 of the pistons
5 or 20 until the locking ring 54 is cut off.

18

CLAIMS:

1. A removable coupling device for a submarine pipeline system, in which pipeline sections 33, 34 35 are provided with end flanges (2) with two oppositely placed, parallel, generally plane side surfaces which in the operating position of the pipeline sections on the seabed extend at least approximately vertically, the coupling device comprising a casing and one or more pathways to connect conduits in adjacent pipeline sections, characterised in that the casing (1) includes a groove at each end arranged to receive the vertical flange portions of the pipeline sections and axially displacable connecting tubes forming part of the pathways for tightly engaging the conduits of the pipeline sections the tubes being capable of retraction to allow the device to be uncoupled.

2. A device as claimed in Claim 1 characterised by prestressing devices (12) which are arranged to be actuated during the connecting operation in order to prestress the respective tube flanges (2) against the coupling device.

3. A device as claimed in Claim 1 or Claim 2 characterised by a locking device (53,54,56) in the casing (1) which, by maintaining the prestressing, is arranged to ensure locking when connected, the locking device being capable of being unlocked to allow for uncoupling.

4. A device as claimed in any preceding Claim characterised in that the groove is a through-running groove having the general shape of a right angled C-shaped edge opening.

5. A device as claimed in any preceding claim characterised in that the connecting tubes are coaxial, telescopically displaceable connecting tubes (4, 19, 24) which in number and size correspond to the conduits (13, 14, 25) and which for each of the flange sides of the coupling device are provided with a common preferably hydraulic servo-piston (5,20), enabling the connecting tubes of the respective flange sides to be displaced simultaneously for tight engagement with the corresponding conduits at the respective axial ends of the coupling device.

6. A device as claimed in any of Claims 2 to 5 characterised in that the prestressing devices comprise four prestressing wedges (12), two for each casing groove in the coupling unit, each wedge being cylindrical and located to press against the flange surface (2) of the adjoining pipeline bundle, each wedge being arranged to be displaced along a wedge surface by hydraulic pressure, the arrangement being self-locking, whereby the hydraulic pressure can be suspended once the desired prestressing of the flange (2) of the pipeline bundle against the coupling device has been achieved.

7. A device as claimed in any preceding claim characterised in that a ring seal (23) is located between the axially displacable connecting tubes (4, 19) associated with one of the flanges (2) and the those (24) associated with the other flange, the ring seal (23) being housed in a groove around the perimeter of one of the connecting tubes, the device further including an enclosing tapered sleeve (8) which serves to put the seal ring (23) under pressure, is axially displacable and is able to be locked in a desired axial position.

8. A device as claimed in Claim 7 characterised in that the diameter of the connecting tube (19,24), except in the sealing area, is reduced, whereby the diameter outside the sealing area will be maintained after the ring seal (23) has been subjected to pressure by means of the tapered sleeve (8) when this is moved to its operative position.

9. A device as claimed in any of Claims 3 to 8 characterised in that the locking device (53, 54, 56) comprises axially displacable elements, which are connected to the connecting tubes, the elements consisting of a locking bar (53) with a transverse groove for a freely movable locking piece (54) and an axially directed locking tube (56) with a locking groove cooperating with the groove in the bar (53) and the locking piece, the locking device being arranged to be positioned in its locking position when the connecting tubes are in their outer, connected position where the locking piece (54) lockingly engages the locking groove of the locking tube (56) and thereby bars any backward movements of the connecting tubes, the locking operation being reversible on uncoupling by increasing the pressure on the decoupling side (10) of the servo-piston (20) until the locking device (54) is cut off, the locking can be (53) and the locking tube

(56) being respectively secured to each of the servo-pistons (5,20), to enable the connecting tubes of each flange side to remain in their outer, connected position when connected.

10. A device as claimed in any preceding claim characterised in that the open connection through the coupling device between the sections of the pipeline bundles (33, 34, 35) serve as a return circuit for inhibitor fluid which is forced to flow through a conduit (38) through the pipeline bundles and coupling units, and the connecting tubes are provided with a hydraulic valve (41) arranged for remote control for automatic opening when the coupling unit (1) is connected to the pipe sections (33, 34, 35).

0200453

Fig.1

Fig.2

Fig.3

FIG. 4

FIG.5

FIG. 6

FIG. 7

FIG. 8

FIG. 9

FIG. 10

FIG.11

**European Patent Office**

**EUROPEAN SEARCH REPORT**

Application number

| DOCUMENTS CONSIDERED TO BE RELEVANT | | | EP 86302988.0 |
|---|---|---|---|
| **Category** | **Citation of document with indication, where appropriate, of relevant passages** | **Relevant to claim** | **CLASSIFICATION OF THE APPLICATION (Int. Cl.4)** |
| A | GB - A - 2 033 463 (FMC CORPORATION) -- | | F 16 L 1/04 |
| A | GB - A - 2 103 745 (LICENTIA) ---- | | |
| | | | **TECHNICAL FIELDS SEARCHED (Int. Cl.4)** |
| | | | F 16 L 1/00 |
| | | | F 16 L 25/00 |
| | | | F 16 L 35/00 |
| | | | F 16 L 39/00 |
| | | | F 16 L 55/00 |

The present search report has been drawn up for all claims

| Place of search | Date of completion of the search | Examiner |
|---|---|---|
| VIENNA | 10-07-1986 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82